(19) Europäisches Patentamt
European Patent Office
Office européen des brevets

(11) **EP 3 305 852 B1**

(12) **EUROPEAN PATENT SPECIFICATION**

(45) Date of publication and mention
of the grant of the patent:
**05.08.2020 Bulletin 2020/32**

(51) Int Cl.:
***C08L 69/00*** *(2006.01)*

(21) Application number: **16806814.6**

(22) Date of filing: **07.06.2016**

(86) International application number:
**PCT/CN2016/085123**

(87) International publication number:
**WO 2016/197916 (15.12.2016 Gazette 2016/50)**

(54) **POLYCARBONATE COMPOSITION AND PREPARATION METHOD THEREFOR**

POLYCARBONATZUSAMMENSETZUNG UND HERSTELLUNGSVERFAHREN DAFÜR

COMPOSÉ DE POLYCARBONATE ET SON PROCÉDÉ DE FABRICATION.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2015 CN 201510308237**

(43) Date of publication of application:
**11.04.2018 Bulletin 2018/15**

(73) Proprietor: **Kingfa Sci. & Tech. Co., Ltd.
Guangzhou, Guangdong 510663 (CN)**

(72) Inventors:
• **DONG, Xiangmao**
  **Guangzhou**
  **Guangdong 510663 (CN)**
• **CEN, Yin**
  **Guangzhou**
  **Guangdong 510663 (CN)**
• **TONG, Wei**
  **Guangzhou**
  **Guangdong 510663 (CN)**
• **AI, Junwei**
  **Guangzhou**
  **Guangdong 510663 (CN)**
• **LI, Mingkun**
  **Guangzhou**
  **Guangdong 510663 (CN)**
• **HE, Jihui**
  **Guangzhou**
  **Guangdong 510663 (CN)**
• **SUN, Donghai**
  **Guangzhou**
  **Guangdong 510663 (CN)**

(74) Representative: **EP&C**
  **P.O. Box 3241**
  **2280 GE Rijswijk (NL)**

(56) References cited:
**WO-A1-2014/205920      CN-A- 1 304 427
CN-A- 101 935 445      CN-A- 101 993 586
CN-A- 103 881 338      CN-A- 104 479 323
CN-A- 104 987 690      JP-A- 2007 045 907
US-A1- 2011 152 418      US-B1- 6 774 166**

**Description**

**TECHNICAL FIELD**

The present invention relates to the technical field of engineering plastics, and particularly relates to a polycarbonate composition and a preparation method thereof.

**BACKGROUND**

Polycarbonate PC has an excellent heat resistance and a relatively high impact resistance and is widely applied in external material fields such as an electrical/electronic product and an automobile part. To improve its processability and overcome a disadvantage of being sensitive to a notch impact, a rubber-modified polymer that has a good processability, an excellent impact strength and an excellent appearance, such as ABS, MBS and the like, may generally be added. Particularly, a PC/ABS alloy that has PC and ABS as main raw materials is an important engineering plastic, which on one hand can improve a heat resistance and a tensile strength of ABS, on the other hand can lower a melt viscosity of PC, ameliorate the processability, and reduce a sensitivity of internal stress and impact strength of a product to a thickness of the product. But when a polycarbonate composition is used in an external material that generates a large amount of heat, such as the electrical/electronic product or the automobile part, the polycarbonate composition must maintain a good fire resistance and a high mechanical strength. Therefore, the market constantly develops technologies that ameliorate the fire resistance of the polycarbonate composition by adding a fire retardant into the polycarbonate composition.

Patent EP2619264194A1 discloses a polycarbonate composition whose fire resistance and impact resistance are modified. A solvent resistance ability of a fire retarding PC/ABS is improved by adding a silicone graft elastomer, but an addition of the elastomer will generally reduce a physical property of a material, particularly a strength and the like. CN-A-104479323 discloses polycarbonate compositions containing tristearoylglycerol and calcium stearate in combination with ethylene bis stearic acid amide as a lubricant component.

Patent CN102791787 discloses a scratch-resisting and impact-resisting polycarbonate molding composition that has a good mechanical property. A solvent resistance property and a scratch resistance property of the molding composition are improved by adding silicon dioxide and kaolin, and generally a bad compatibility between an inorganic filler and a resin leads to a serious reduction of properties of the composition.

Until now, no influences of a compounding content of a glyceryl stearate and a salt of stearate on the solvent resistance property of the polycarbonate composition have been reported.

With a result of extensive experiments, the inventor surprisingly has found that, when a compounding mass percentage content of the glyceryl stearate and the salt of stearate, which is based on a total mass of the polycarbonate composition and used in a polycarbonate composition formula, is less than or equal to 1.5 wt%, the solvent resistance property of the polycarbonate composition is well improved, and the polycarbonate composition is particularly suitable for an occasion with relatively high requirements for an operating environment.

**SUMMARY OF THE INVENTION**

In order to overcome disadvantages and shortcomings of the prior art, an object of the present invention is to provide a polycarbonate composition that has an excellent solvent resistance property.

Another object of the present invention is to provide a preparation method of the above-described polycarbonate composition.

The present invention is accomplished by the following technical solution:
a polycarbonate composition, comprising following components in parts by weight:

    a. 30-75 parts of the polycarbonate;
    b. 8.5-35 parts of the rubber-modified graft copolymer;
    c. 5.5-25 parts of the fire retardant; and
    d. 0-10 parts of the other aids;

wherein the sum of the parts by weight of the four components a, b, c, and d is 100, and a compounding mass percentage content of a glyceryl stearate and a salt of stearate based on a total mass of the polycarbonate composition is less than or equal to 1.5 wt% and greater than or equal to 0.01 wt%.

the compounding mass percentage content of the glyceryl stearate and the salt of stearate based on the total mass of the polycarbonate composition is less than or equal to 1 wt% and greater than or equal to 0.05 wt%, further preferably, less than or equal to 0.8 wt% and greater than or equal to 0.1 wt%.

In particular, a compounding mass ratio of the glyceryl stearate to the salt of stearate based on the total mass of the polycarbonate composition is 2:1 to 1:5, preferably 1:2 to 1:3.

In particular, the glyceryl stearate is selected from one or more of glycerin monostearate, glycerol distearate, and glyceryl tristearate; and the glyceryl stearate may be prepared by methods such as a direct esterification method, a transesterification method, a method of saponification of glycidol, and a method of phase transfer catalysis of epichlorohydrin.

The salt of stearate is selected from one or more of zinc stearate, magnesium stearate, and calcium stearate.

The polycarbonate is selected from one or more of an aromatic polycarbonate, an aliphatic polycarbonate, an aromatic-aliphatic polycarbonate, a branched polycarbonate, and a siloxane copolycarbonate, preferably the aromatic polycarbonate.

The aromatic polycarbonate is an aromatic polycarbonate with a viscosity-average molecular weight of 13000-40000, more preferably the aromatic polycarbonate with the viscosity-average molecular weight of 16000-28000, and more preferably the aromatic polycarbonate with the viscosity-average molecular weight of 17000-24000.

In particular, the polycarbonate is selected from one or more of a polycarbonate prepared by an interfacial polymerization method, a polycarbonate prepared by a melted state transesterification method, a polycarbonate prepared by a pyridine method, a polycarbonate prepared by a method of ring-opening polymerization of a cyclic carbonate compound and a polycarbonate prepared by a method of solid phase transesterification of a prepolymer. The particularly preferred methods will be described in detail below.

Firstly a method of producing a polycarbonate resin by the interfacial polymerization method will be described: in the interfacial polymerization method, firstly, making a dihydroxy compound and a carbonate precursor (preferably a phosgene) react in the presence of an inert organic solvent and an aqueous alkali, generally pH is kept at 9 and above at the same time, and then performing the interfacial polymerization in the presence of a polymerization catalyst to obtain the polycarbonate resin. A molecular weight regulator (chain terminator) and an antioxidant that avoids oxidation of the dihydroxy compound may also exist in a reaction system according to requirements.

The dihydroxy compound and the carbonate precursor have been listed above. The phosgene used as the carbonate precursor is particularly preferred, and wherein such method using the phosgene is particularly called a phosgene method.

Examples of the inert organic solvent include a hydrochloric ether, such as dichloromethane, 1,2-dichloroethane, chloroform, single chlorobenzene and dichlorobenzene; and an aromatic hydrocarbon, such as benzene, methylbenzene, and dimethylbenzene. One kind of the organic solvent may be used, or two or more kinds of the organic solvents may be used in an expected combination and an expected proportion.

Examples of an alkali compound comprised in the aqueous alkali include an alkali metal compound, such as sodium hydroxide, potassium hydroxide, lithium hydroxide and sodium bicarbonate; and an alkaline earth metal compound. Sodium hydroxide and potassium hydroxide are preferred. One kind of the alkali compound may be used, or two or more kinds of the alkali compounds may be used in an expected combination and an expected proportion.

Although a concentration of the alkali compound in the aqueous alkali herein is not limited, but 5 wt%-10 wt% is generally used to control the pH of the aqueous alkali to be 10 to 12 during the reaction. In addition, for example, when the phosgene bubbles, a mole ratio of a bisphenol compound to the alkali compound is generally set to be greater than or equal to 1:1.9, and preferably greater than or equal to 1:2.0, but less than or equal to 1:3.2, and preferably less than or equal to 1:2.5, to control pH of an aqueous phase to be 10 to 12, preferably 10 to 11.

Examples of the polymerization catalyst include an aliphatic tertiary amine, such as trimethylamine, triethylamine, tributylamine, tripropylamine, trihexylamine and the like; a cycloaliphatic tertiary amine, such as N,N'-dimethylcyclohexylamine, N,N'-diethylcyclohexylamine and the like; an aromatic tertiary amine, such as N,N'-dimethylaniline, N,N'-diethylaniline and the like; a quaternary ammonium salt, such as trimethylbenzylammonium chloride, tetramethylammonium chloride, triethylbenzylammonium chloride and the like; a pyridine; a guanine; and a guanidinium salt and so on. One kind of the polymerization catalyst may be used, or two or more kinds of the polymerization catalysts may be used in an expected combination and an expected proportion.

Examples of the molecular weight regulator include an aromatic phenol having univalent phenolic hydroxyl groups; an alcohol, such as methanol, butanol and the like; mercaptan; and phthalimides; and so on, and among these, the aromatic phenol is preferred. Specific examples of this kind of aromatic phenol include an alkyl substituted phenol such as m-methylphenol, p-methylphenol, m-propylphenol, p-propylphenol, p-tert-butylphenol, p-long chain alkyl substituted phenol and the like; an vinyl-containing phenol such as isopropenylphenol; an epoxy group-containing phenol; and a carboxyl-containing phenol, such as o-hydroxybenzoic acid 2-methyl-6-hydroxyphenylacetic acid and the like. One kind of the molecular weight regulator may be used, or two or more kinds of the molecular weight regulators may be used in an expected combination and an expected proportion.

A dosage of the molecular weight regulator is generally greater than or equal to 0.5 mol relative to every 100 mol of the dihydroxy compound and preferably greater than or equal to 1 mol, but is generally less than or equal to 50 mol, and preferably less than or equal to 30 mol. Setting the dosage of the molecular weight regulator to such range may ameliorate a thermal stability and a hydrolytic resistance of a polycarbonate resin composition.

A reaction substrate, a reaction medium, a catalyst, an additive and etc. may be mixed together in any expected order, as long as the expected polycarbonate resin can be obtained, and an appropriate order may be created according to requirements. For example, when the phosgene is used as the carbonate precursor, the molecular weight regulator may be added at any expected time between the time when the dihydroxy compound reacts with the phosgene (phosgenation) and the time when the polymerization reaction starts.

A reaction temperature is generally set as 0 to 40 °C, and a reaction time is generally ranges from several minutes (such as 10 minutes) to several hours (such as 6 hours).

Next, a preparation method of the polycarbonate resin by the melted state transesterification will be described: in the melted state transesterification method, for example, a transesterification is performed between a carbonic acid diester and the dihydroxy compound.

At the same time, examples of the carbonic acid diester include a dialkyl carbonate compound, such as dimethyl carbonate, diethyl carbonate, di-tert-butyl dicarbonate; diphenyl carbonate; and a substituted diphenyl carbonate, such as ditolyl carbonate and the like. Among these, diphenyl carbonate and the substituted diphenyl carbonate are preferred, and particularly, diphenyl carbonate is even more preferred. One kind of the carbonic acid diester may be used, or two or more kinds of the carbonic acid diesters may be used in an expected combination and an expected proportion.

The dihydroxy compound and the carbonic acid diester with an expected ratio may be used on a condition that an objective polycarbonate resin can be obtained, but using greater than or equal to 1 molar equivalent of the carbonic acid diester relative to every 1 mol of the dihydroxy compound is preferred, and using greater than or equal to 1.01 molar equivalents of the carbonic acid diester is even more preferred. However, an upper limit generally is less than or equal to 1.30 molar equivalents. A content of the terminal hydroxyl group may be regulated to a preferred range by setting the ratio of the two compounds into this kind of range.

The content of the terminal hydroxyl group in the polycarbonate resin tends to greatly influence the thermal stability, the hydrolytic resistance, and the hue. Therefore, the content of the terminal hydroxyl group may be regulated by any expected methods that are well known according to requirements. In the transesterification reaction, wherein the polycarbonate resin for regulating the content of the terminal hydroxyl group may be obtained by regulating a mixing ratio between the carbonic acid diester and an aromatic dihydroxy compound, and by regulating an extent of a pressure reduction. In addition, the molecule weight of the polycarbonate resin obtained may generally be regulated by such progress.

Therein, in the case that regulation of the content of the terminal hydroxyl group is regulated by the mixing ratio of the carbonic acid diester and the dihydroxy compound, the above-described mixing ratio is used.

It may be mentioned that wherein individually adding the chain terminator during the reaction is a more positive regulating method. Examples of the chain terminator during the process include for example a monovalent phenol, a monovalent carboxylic acid, a carbonate diester and the like. One kind of the chain terminator may be used, or two or more kinds of the chain terminators may be used in an expected combination and an expected proportion.

When producing the polycarbonate resin by the melted state transesterification method, a transesterification catalyst is generally used. Any expected transesterification catalyst may be used. Among these, for example, using the alkali metal compound and/or the alkali earth metal compound is preferred. In addition, as an ancillary compound, for example, the alkaline compound, such as an alkaline boron compound, an alkaline phosphorus compound, an alkaline ammonium compound, an alkaline amine compound and the like, may be used. One kind of the transesterification catalyst may be used, or two or more kinds of the transesterification catalysts may be used in an expected combination and an expected proportion.

A reaction temperature in the melted state transesterification method is generally 100 °C to 320 °C. In addition, a reaction is generally performed under the reduced pressure of less than or equal to 2 mmHg. A detailed process should be a process in which a melting condensation polymerization reaction is performed under the above-described condition, and a by-product such as an aromatic hydroxyl compound is removed at the same time.

The melting condensation polymerization reaction may be performed by a batch process or a continuous process. When the batch process is performed, the reaction substrate, the reaction medium, the catalyst and the additive and etc. may be mixed together in any expected order, as long as an objective aromatic polycarbonate resin can be obtained, and an appropriate order may be created according to requirements. However, among these, considering for example a stability of the polycarbonate and the polycarbonate resin composition, the melting condensation polymerization performed by the continuous process is preferred.

A catalyst deactivation agent may be used in the melted state transesterification method according to requirements. Any expected compound neutralizing the transesterification catalyst may be used as the catalyst deactivation agent. Examples include a sulfur-containing organic compound and derivatives thereof and the like. One kind of the catalyst deactivation agent may be used, or two or more kinds of the catalyst deactivation agents may be used in an expected combination and an expected proportion.

A dosage of the catalyst deactivation agent generally should be greater than or equal to 0.5 weight equivalent and preferably greater than or equal to 1 weight equivalent, relative to the alkali metal or the alkaline earth metal that is contained in the transesterification catalyst. Besides, a concentration of the catalyst deactivation agent generally should be greater than or equal to 1 ppm, but generally less than or equal to 100 ppm, and preferably less than or equal to 20 ppm, relative to the aromatic polycarbonate resin.

In particular, a molecular weight of the polycarbonate resin is arbitrary and can be selected and determined properly, but the viscosity-average molecular weight [Mv] calculated from a liquid viscosity is generally greater than or equal to 10,000, preferably greater than or equal to 16,000, and more preferably greater than or equal to 17000; but generally less than or equal to 40,000, preferably less than or equal to 28,000, and more preferably less than or equal to 24,000. A mechanical strength of the polycarbonate resin composition of the present invention can be further improved by setting the viscosity-average molecular weight greater than or equal to a lower limit of the above-described range, and which is even more expected when the composition is used in an application that requires a high mechanical strength. Meanwhile, a reduction of a flowability of the polycarbonate composition of the present invention can be controlled or ameliorated by setting the viscosity-average molecular weight greater than or equal to an upper limit of the above-described range, which improves a moldability and facilitates a thin-wall molding method. Two or more kinds of the polycarbonate compositions that have different viscosity-average molecular weights may be mixed and used together and the polycarbonate composition that has the viscosity-average molecular weight outside the above-described preferred range may also be contained in a mixture in this case.

A term of viscosity-average molecular weight [$M_v$] means a value obtained by calculating a Schnell viscosity equation, i.e. $\eta = 1.23 \times 10^{-4} Mv^{0.83}$, wherein an intrinsic viscosity [$\eta$] (unit: dl/g) is determined by a measurement using an Ubbelohde viscometer and using chloromethane as a solvent under a temperature of 20 °C. In addition, the intrinsic viscosity [$\eta$] is a value obtained by calculating an equation below after measuring a specific viscosity [$\eta_{sp}$] in solutions of various concentrations [C] (g/dl):

$$\eta = \lim_{c \to 0} \eta_{sp}/c$$

A concentration of a terminal hydroxyl group in the polycarbonate resin is arbitrary and can be selected and determined according to requirements, but generally is less than or equal to 1,000 ppm, preferably less than or equal to 800 ppm, and more preferably less than or equal to 600 ppm. Therefore, a residual thermal stability and a hue of the polycarbonate resin composition of the present invention may be even further ameliorated. A lower limit of the concentration, particularly in the case of producing the polycarbonate resin by the melted state transesterification method, generally is greater than or equal to 10 ppm, preferably greater than or equal to 30 ppm, and more preferably greater than or equal to 40 ppm. A reduction of the molecular weight can be avoided, such that a mechanical characteristic of the polycarbonate resin composition can be more ameliorated.

Unit of the concentration of the terminal hydroxyl group herein is presented as ppm, which is based on a mass of the terminal hydroxyl group versus a mass of the polycarbonate resin. A colorimetric analysis by carbon tetrachloride/acetic acid procedure is used as a measurement method (see also Macromol. Chem., 88, 215, 1965).

The polycarbonate resin may be used as an individual polycarbonate resin (wherein the term of "individual polycarbonate resin" isn't limited to a model that includes only one kind of a polycarbonate resin, for example, including a model containing a plurality of polycarbonate resins having different monomer formulas and different molecular weights), or may be combined and used as an alloy (a mixture) of the polycarbonate resin and different thermoplastic resins. Besides, the polycarbonate resin may constitute a copolymer that has the polycarbonate resin as its main component, such as a copolymer comprising an oligomer or a polymer containing a siloxane structure for an object of further improving the fire resistance and the impact resistance; a copolymer comprising a monomer, an oligomer or a polymer containing a phosphorus atom for an object of further improving a thermal oxidation stability and the fire resistance; a copolymer comprising a monomer, an oligomer or a polymer containing a dioxyanthraquinone structure for an object of improving the thermal oxidation stability; a copolymer comprising an oligomer or a polymer for example represented by a polystyrene, containing a olefin structure, for an object of ameliorating an optical property; and a copolymer comprising a polyester resin oligomer or polymer for an object of improving chemical resistance; and so on.

For the objects of improving an appearance of a molding product and ameliorating flowability, the polycarbonate resin may also comprise a polycarbonate oligomer. A viscosity-average molecular weight [Mv] of the polycarbonate oligomer is generally greater than or equal to 1,500, and preferably greater than or equal to 2,000, but generally less than or equal to 9,500, and preferably less than or equal to 9,000. Besides, preferably, a content of the comprised polycarbonate oligomer is set as less than or equal to 30 wt% of the polycarbonate resin (comprising the polycarbonate oligomer).

Besides, the polycarbonate resin may be a polycarbonate resin that is reproduced by a used manufactured product, rather than a kind of polycarbonate resin that is made from an unused raw material (so-called recycled material polycarbonate resin). Examples of the used manufactured product include an optical recording medium such as a disc and the like; a transparent automotive part such as an automotive window glass, an automotive head-light glass, a windscreen and the like; a container such as a water bottle and the like; a spectacle lens; and a building material such as a acoustic panel, a glass window, and a corrugated plate; and so on. In addition, a crushing product or a molten pellet that is obtained from a defective good, a slag, a runner and the like may be used.

However, it should be noticed that a reproduced polycarbonate resin is preferably less than or equal to 80 wt%, and more preferably less than or equal to 50 wt% of the polycarbonate resin that is comprised in the polycarbonate resin composition of the present invention. The reproduced polycarbonate resin may well go through degradation because of heat or aging, and if this kind of polycarbonate resin is used in an amount greater than the above-described range, it may negatively influence a hue and the mechanical characteristic.

In particular, the rubber-modified graft copolymer is selected from one or more of a rubber-modified graft polymer prepared by an emulsion polymerization, a rubber-modified graft polymer prepared by a solution polymerization, a rubber-modified graft polymer prepared by a bulk polymerization, a rubber-modified graft polymer prepared by a suspension polymerization and a rubber-modified graft polymer prepared by a bulk-suspension polymerization.

In particular, the rubber-modified graft copolymer is selected from graft copolymers containing following b.1 on b.2 in parts by weight:

b.1 5-95 parts of a mixture of b. 1.1 and b.1.2:

b.1.1 50-95 parts of one or more of styrene, a styrene derivative such as $\alpha$-methyl styrene, p-benzyl styrene, and divinyl styrene, C1-C8 alkyl methacrylate, C1-C8 alkyl acrylate, dimethyl siloxane, phenyl siloxane, and a multi-alkyl siloxane;
b.1.2 5-50 parts of one or more of acrylonitrile, methyl acrylonitrile, C1-C8 alkyl methacrylate, and C1-C8 alkyl acrylate; and

b.2 5-95 parts of one or more of a polybutadiene, a polyisoprene, a styrene-butadiene random copolymer and block copolymer, an acrylonitrile-butadiene random copolymer and block copolymer, a copolymer of a polybutadiene and a polyisoprene, a copolymer of ethylene and $\alpha$-alkene, a copolymer of ethylene and an $\alpha$-unsaturated carboxylate, an ethylene-propene-nonconjugated diene terpolymer, an acryloyl rubber, and an organic siloxane rubber.

Preferably, the rubber-modified graft copolymer is selected from one or more of an acrylonitrile-styrene copolymer AS, an acrylonitrile-butadiene-styrene graft copolymer ABS, a methyl methacrylate-acrylonitrile-butadiene-styrene copolymer MABS, an acrylonitrile-styrene-propenoic acid terpolymer ASA, and a methyl methacrylate-butadiene-styrene graft copolymer MBS, preferably the acrylonitrile-butadiene-styrene graft copolymer ABS; wherein, a particle size of the MBS is preferably 0.1 $\mu$m to 0.5 $\mu$m, the particle size of the ABS in the bulk polymerization method is preferably 0.1 $\mu$m to 2 $\mu$m, and the particle size of the ABS in the emulsion polymerization method is preferably 0.05 $\mu$m to 0.2 $\mu$m.

In particular, the fire retardant is selected from a halogen-based fire retardant or a halogen-free fire retardant, preferably the halogen-free fire retardant; the halogen-based fire retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl ether, decabromodiphenyl, a brominated polycarbonate, perbromotricyclopentadecane or a brominated aromatic crosslinked polymer, preferably the brominated polystyrene. The halogen-free fire retardant is selected from one or more of a nitrogen-containing fire retardant, a phosphorus-containing fire retardant or a nitrogen- and phosphorus-containing fire retardant, preferably the phosphorus-containing fire retardant.

Preferably, the phosphorus-containing fire retardant is selected from one or more of triphenyl phosphate, tritolyl phosphate, cresyl diphenyl phosphate, trixylyl phosphate, tris(2,4,6-trimethylphenyl) phosphate, tris(2,4-di-tert-butylphenyl) phosphate, tris(2,6-di-tert-butylphenyl) phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

The polycarbonate composition may further comprise other aids, for example, selected from one or more of a heat stabilizer, an antioxidant, an anti-dripping agent, a light stabilizer, a plasticizer, a filler, and a colorant.

The suitable thermal stabilizer includes an organic phosphite such as triphenyl phosphite, tris(2,6-dimethylphenyl) phosphite, and tris(nonyl phenyl) phosphite, dimethylphenyl phosphonate, and trimethyl phosphate.

The suitable antioxidant includes an organic phosphite, an alkylated monophenol or polyphenol, an alkylated reaction product of a polyphenol and a diene, a butylated reaction product of p-cresol or dicyclopentadiene, alkylated hydroquinones, hydroxylated thiodiphenyl ethers, alkylene-bisphenol, a benzyl compound, polyol esters and etc.

The suitable anti-dripping agent is preferably a fluorated polyolefin, and the fluorated polyolefin is well known (referring to EP-A 640 655, for example). A commercially preferred product is, for example, obtained from Teflon® 30 N of DuPont.

The suitable light stabilizer includes one or a plurality of combinations of benzotriazoles and benzophenones.

The suitable plasticizer is phthalate.

The suitable filler includes titanium dioxide, talc powder, mica, barium sulfate and etc.

The suitable colorant includes various pigments and dyes.

A preparation method of the above-described polycarbonate composition comprises following steps:

1) adding a glyceryl stearate and a salt of stearate with a compounding mass percentage content relative to the polycarbonate composition being less than or equal to 1.5 wt% and greater than or equal to 0.01 wt%, into a rubber-modified graft polymer component to obtain a pretreated rubber-modified graft polymer; and

2) after weighing the pretreated rubber-modified graft polymer, the polycarbonate composition, a fire retardant and other aids in proportion, blending by a high-speed mixer or a mixer, extruding, cooling by means of water, and pelletizing to obtain a columnar particulate polycarbonate composition.

Because the polycarbonate composition of the present invention has an excellent solvent resistance property, the polycarbonate composition of the present invention can be used for outdoor and indoor application fields, for example shell parts of various types and sizes, household appliances such as a TV set, a printer, a modem shell, and a display shell, or automobile parts for outdoor use, an enclosure or a cover in a building field, and a housing and a frame for an electrical appliance.

Compared with the prior art, the present invention has following advantageous effects:

according to the present invention, when the compounding mass percentage content of the glyceryl stearate and the salt of stearate, which is based on the total mass of the polycarbonate composition and used in a polycarbonate composition formula, is less than or equal to 1.5 wt%, because the glyceryl stearate has a relative good compatibility with an organic solvent such as ethanol, methylbenzene, a peanut oil, an antirust agent and the like, the glyceryl stearate can first contact with and exhaust these organic solvents, and the salt of stearate can control the process of the glyceryl stearate, and thereby a solvent resistance property of the polycarbonate composition is well improved, and the polycarbonate composition is particularly suitable for an occasion with relatively high requirements for an operating environment.

## DETAILED DESCRIPTION OF THE PREFERRED EMBODIMENT

The present invention will be further described below by specific implementations, the following embodiments are preferred implementations of the present invention, but the embodiments of the present invention are not limited by the following embodiments.

Testing standards or methods of various properties:

a testing method of a solvent resistance property: organic solvents including ethanol, methylbenzene, a peanut oil and an antirust agent were used to coat on tension splines, a changing situation of a GB1040-1/2 tensile strength was respectively compared after the tension splines were bent for 0%, 0.5% and 1.0% for 3 days.

A polycarbonate used in the present invention comprises:

a component a-1: PC 1300-10 (LG, Korea); and
a component a-2: PC 1225 (Teijin, Japan).

A rubber-modified graft copolymer used in the present invention comprises:

a component b-1: ABS1 emulsion polymerization method 757 (Chi Mei, Taiwan);
a component b-2: ABS2 bulk polymerization method 8391 (Gaoqiao, Shanghai); and
a component b-3: MBS EM500 (LG, Korea).

A fire retardant used in the present invention comprises:

a component c: BDP, bisphenol A-bis(diphenyl phosphate) (ADEKA).
Glyceryl stearate: glycerin monostearate (Haian petrochemical plant, Jiangsu).
A salt of stearate: zinc stearate (Shuangma chemistry Co., Ltd., Rugao).

Other aids used in the present invention comprises:

a component d-1: AO1076: $\beta$-(3,5-di-tert-butyl-4-hydroxyphenyl)propionic acid stearyl ester, CAS NO.: [2082-79-3]), as an antioxidant; and

a component d-2: PTFE (polytetrafluoroethylene), as an anti-dripping agent.

**Embodiments 1-12 and Comparative Examples 1-6: Preparation of Polycarbonate Compositions**

The glyceryl stearate and the salt of stearate with a compounding mass percentage content relative to the polycarbonate composition being less than or equal to 1.5 wt% and greater than or equal to 0.01 wt% were added into a rubber-modified graft polymer component to obtain a pretreated rubber-modified graft polymer. After the pretreated rubber-modified graft polymer, the polycarbonate composition, the fire retardant and other aids were weighed in accordance with formulas in Table 1, they were blended by a high-speed mixer or a mixer, extruded, cooled by means of water, and pelletized to obtain a columnar particulate polycarbonate composition. The GB1040-1/2 tensile strength of the polycarbonate compositions after treated with various solvents (ethanol, methylbenzene, the peanut oil and the antirust agent) for 3 days were tested, and data were listed in Table 1.

Table 1 Specific proportion (parts by weight) and other property testing results in Embodiments 1-12 and Comparative Examples 1-6

|  | Embodiment 1 | Embodiment 2 | Embodiment 3 | Embodiment 4 | Embodiment 5 | Embodiment 6 | Embodiment 7 | Embodiment 8 | Embodiment 9 | Embodiment 10 | Embodiment 11 | Embodiment 12 |
|---|---|---|---|---|---|---|---|---|---|---|---|---|
| component a-1 | 29.8 | 51 | 64 | 69 | 70 | 79.8 |  |  |  |  |  |  |
| component a-2 |  |  |  |  |  |  | 29.8 | 51 | 64 | 69 | 70 | 79.8 |
| component b-1 | 50.2 |  |  |  | 15 | 8.2 | 50.2 |  |  | 15 | 15 | 8.2 |
| component b-2 |  | 30 |  | 15 |  |  |  | 30 |  |  |  |  |
| component b-3 |  |  | 20 |  |  |  |  |  | 20 |  |  |  |
| component c | 19 | 18 | 15 | 15 | 14 | 11 | 19 | 18 | 15 | 15 | 14 | 11 |
| component d-1 | 0.5 | 0.5 | 0.5 | 0.5 | 0.5 | 0.5 | 0.5 | 0.5 | 0.5 | 0.5 | 0.5 | 0.5 |
| component d-2 | 0.5 | 0.5 | 0.5 | 0.5 | 0.5 | 0.5 | 0.5 | 0.5 | 0.5 | 0.5 | 0.5 | 0.5 |
| glyceryl stearate (wt%) | 0.2 | 0.15 | 0.75 | 0.16 | 0.5 | 0.4 | 0.1 | 0.3 | 0.5 | 0.1 | 0.3 | 0.12 |
| salt of | 0.1 | 0.75 | 0.75 | 0.8 | 1 | 0.8 | 0.2 | 0.6 | 1 | 0.5 | 0.6 | 0.24 |

| | | | | | | | | | | | | |
|---|---|---|---|---|---|---|---|---|---|---|---|---|
| stearate (wt%) | | | | | | | | | | | | |
| tensile strength of untreated spline | 54 | 58 | 55 | 62 | 56 | 54 | 72 | 78 | 71 | 74 | 72 | 75 |
| tensile strength after being bent for 0.5% for 3 days without solvent | 57 | 58 | 50 | 62 | 56 | 54 | 72 | 78 | 70 | 73 | 72 | 75 |
| tensile strength after being bent for 0.5% for 3 days in ethanol | 54 | 58 | 52 | 65 | 56 | 53 | 73 | 78 | 72 | 74 | 70 | 74 |
| tensile strength after being bent for 0.5% for 3 days, coated with methylbenzene | 54 | 57 | 52 | 65 | 55 | 52 | 72 | 78 | 72 | 73 | 70 | 72 |
| tensile strength after being bent for 0.5% for 3 days, coated with peanut oil | 50 | 52 | 57 | 61 | 52 | 51 | 73 | 74 | 70 | 75 | 70 | 75 |
| tensile strength after being | 59 | 56 | 55 | 64 | 55 | 53 | 75 | 71 | 72 | 74 | 70 | 75 |

| bent for 0.5% for 3 days, coated with antirust agent oil | | | | | | | | | | | |
|---|---|---|---|---|---|---|---|---|---|---|---|

Continued- Table 1

| | Comparative Example 1 | Comparative Example 2 | Comparative Example 3 | Comparative Example 4 | Comparative Example 5 | Comparative Example 6 |
|---|---|---|---|---|---|---|
| component a-1 | 29.8 | 51 | 64 | 69 | 70 | 79.8 |
| component a-2 | | | | | | |
| component b-1 | 50 | | | | 15 | 8.2 |
| component b-2 | | 30 | | 15 | | |
| component b-3 | | | 20 | | | |
| component c | 19 | 18 | 15 | 15 | 14 | 11 |
| component d-1 | 0.5 | 0.5 | 0.5 | 0.5 | 0.5 | 0.5 |
| component d-2 | 0.5 | 0.5 | 0.5 | 0.5 | 0.5 | 0.5 |
| glyceryl stearate (wt%) | 3 | | 2.25 | 5 | 0.3 | 0.36 |
| salt of stearate (wt%) | | 3 | 0.75 | 1 | 2.7 | 3.24 |
| tensile strength of untreated spline | 40 | 48 | 47 | 45 | 43 | 46 |
| tensile strength after being bent for 0.5% for 3 days without solvent | 48 | 42 | 48 | 45 | 44 | 48 |

| | | | | | |
|---|---|---|---|---|---|
| tensile strength after being bent for 0.5% for 3 days in ethanol | 31 | 30 | 34 | 35 | 30 | 34 |
| tensile strength after being bent for 0.5% for 3 days, coated with methylbenzene | 32 | 36 | 33 | 29 | 33 | 38 |
| tensile strength after being bent for 0.5% for 3 days, coated with peanut oil | 27 | 23 | 20 | 18 | 27 | 33 |
| tensile strength after being bent for 0.5% for 3 days, coated with antirust agent oil | 34 | 30 | 36 | 32 | 35 | 30 |

It may be seen from a comparison of Embodiments with Comparative Examples in Table 1 that, according to the present invention, when the compounding mass percentage content of the glyceryl stearate and the salt of stearate, which is based on the total mass of the polycarbonate composition and used in the polycarbonate composition formula, is less than or equal to 1.5 wt%, because the glyceryl stearate has a relative good compatibility with the organic solvent such as ethanol, methylbenzene, the peanut oil, the antirust agent and the like, the glyceryl stearate can first contact with and exhaust these organic solvents, and the salt of stearate can control the process of the glyceryl stearate, and thereby the solvent resistance property of the polycarbonate composition is well improved, and the polycarbonate composition is particularly suitable for an occasion with relatively high requirements for an operating environment.

## Claims

1. A polycarbonate composition, comprising following components in parts by weight:

   a. 30-75 parts of the polycarbonate;
   b. 8.5-35 parts of the rubber-modified graft copolymer;
   c. 5.5-25 parts of the fire retardant; and
   d. 0-10 parts of the other aids;
   wherein the sum of the parts by weight of the four components a, b, c, and d is 100, and

**EP 3 305 852 B1**

a compounding mass percentage content of a glyceryl stearate and a salt of stearate based on a total mass of the polycarbonate composition is less than or equal to 1.5 wt% and greater than or equal to 0.01 wt%.

2. The polycarbonate composition according to claim 1, wherein the compounding mass percentage content of the glyceryl stearate and the salt of stearate based on the total mass of the polycarbonate composition is less than or equal to 1 wt% and greater than or equal to 0.05 wt%; more preferably less than or equal to 0.8 wt% and greater than or equal to 0.1 wt%.

3. The polycarbonate composition according to claim 1 or 2, wherein a compounding weight ratio of the glyceryl stearate to the salt of stearate is 2:1 to 1:5; preferably 1:2 to 1:3.

4. The polycarbonate composition according to any of claims 1 to 3, wherein the glyceryl stearate is selected from one or more of glycerin monostearate, glycerol distearate, and glyceryl tristearate; and the salt of stearate is selected from one or more of zinc stearate, magnesium stearate and calcium stearate.

5. The polycarbonate composition according to claim 1, wherein the polycarbonate is selected from one or more of a polycarbonate prepared by an interfacial polymerization method, a polycarbonate prepared by a melted state transesterification method, a polycarbonate prepared by a pyridine method, a polycarbonate prepared by a method of ring-opening polymerization of a cyclic carbonate compound and a polycarbonate prepared by a method of solid phase transesterification of a prepolymer.

6. The polycarbonate composition according to claim 1, wherein the polycarbonate is selected from one or more of an aromatic polycarbonate, an aliphatic polycarbonate, an aromatic-aliphatic polycarbonate, a branched polycarbonate, and a siloxane copolycarbonate, preferably the aromatic polycarbonate; and the aromatic polycarbonate is selected from an aromatic polycarbonate with a viscosity-average molecular weight of 13000-40000, more preferably the aromatic polycarbonate with the viscosity-average molecular weight of 16000-28000, and more preferably the aromatic polycarbonate with the viscosity-average molecular weight of 17000-24000, wherein the viscosity-average molecular weights are determined by a measurement using an Ubbelohde viscometer and using chloromethane as a solvent under a temperature of 20 ° C and using the method given in the present specification.

7. The polycarbonate composition according to claim 1, wherein the rubber-modified graft copolymer is selected from one or more of a rubber -modified graft polymer prepared by an emulsion polymerization, a rubber-modified graft polymer prepared by a solution polymerization, a rubber-modified graft polymer prepared by a bulk polymerization, a rubber-modified graft polymer prepared by a suspension polymerization and a rubber-modified graft polymer prepared by a bulk-suspension polymerization.

8. The polycarbonate composition according to claim 1, wherein the rubber-modified graft copolymer is selected from graft copolymers containing following b.1 on b.2 in parts by weight:

   b.1 5-95 parts of a mixture of b.1. 1 and b.1.2:

   b.1.1 50-95 parts of one or more of styrene, a styrene derivative such as $\alpha$-methyl styrene, p-benzyl styrene, and divinyl styrene, a C1-C8 alkyl methacrylate, a C1-C8 alkyl acrylate, dimethyl siloxane, phenyl siloxane, and a multi-alkyl siloxane;
   b.1.2 5-50 parts of one or more of acrylonitrile, methyl acrylonitrile, a C1-C8 alkyl methacrylate, and a C1-C8 alkyl acrylate; and

   b.2 5-95 parts of one or more of a polybutadiene, a styrene-butadiene random copolymer and block copolymer, an acrylonitrile-butadiene random copolymer and block copolymer, a copolymer of a polybutadiene and a polyisoprene, a copolymer of ethylene and $\alpha$-alkene, a copolymer of ethylene and an $\alpha$-unsaturated carboxylate, and an ethylene-propene-nonconjugated diene terpolymer.

9. The polycarbonate composition according to claim 8, wherein the rubber-modified graft copolymer is selected from one or more of an acrylonitrile-styrene copolymer AS, an acrylonitrile-butadiene-styrene graft copolymer ABS, a methyl methacrylate-acrylonitrile-butadiene-styrene copolymer MABS, an acrylonitrile-styrene-propenoic acid terpolymer ASA and a methyl methacrylate-butadiene-styrene graft copolymer MBS, preferably the acrylonitrile-butadiene-styrene graft copolymer ABS; wherein a particle size of the MBS is preferably 0.1 $\mu$m to 0.5 $\mu$m, a particle size of the ABS in a bulk polymerization method is preferably 0.1 $\mu$m to 2 $\mu$m, and a particle size of the ABS in an

12

emulsion polymerization method is preferably 0.05 $\mu$m to 0.2 $\mu$m.

10. The polycarbonate composition according to claim 1, wherein the fire retardant is selected from a halogen-based fire retardant or a halogen-free fire retardant, preferably the halogen-free fire retardant; the halogen-based fire retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl ether, decabromodiphenyl, a brominated polycarbonate, perbromotricyclopentadecane or a brominated aromatic crosslinked polymer, preferably the brominated polystyrene; and the halogen-free fire retardant is selected from one or more of a nitrogen-containing fire retardant, a phosphorus-containing fire retardant or a nitrogen- and phosphorus-containing fire retardant, preferably the phosphorus-containing fire retardant.

11. The polycarbonate composition according to claim 10, wherein the phosphorus-containing fire retardant is selected from one or more of triphenyl phosphate, tritolyl phosphate, cresyl diphenyl phosphate, trixylyl phosphate, tris(2,4,6-trimethylphenyl) phosphate, tris(2,4-di-tert-butylphenyl) phosphate, tris(2,6-di-tert-butylphenyl) phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

12. The polycarbonate composition according to claim 1, wherein the other aids of the component d is selected from one or more of a heat stabilizer, an antioxidant, an anti-dripping agent, a light stabilizer, a plasticizer, a filler, and a colorant.

13. A preparation method of the polycarbonate composition according to any of claims 1 to 12, **characterized in that**, the preparation method includes following steps:

1) adding a glyceryl stearate and a salt of stearate with a compounding mass percentage content relative to the polycarbonate composition being less than or equal to 1.5 wt% and greater than or equal to 0.01 wt%, into a rubber-modified graft polymer component to obtain a pretreated rubber-modified graft polymer; and
2) after weighing the pretreated rubber-modified graft polymer, the polycarbonate composition, a fire retardant and other aids in proportion, blending by a high-speed mixer or a mixer, extruding, cooling by means of water, and pelletizing to obtain a columnar particulate polycarbonate composition.

**Patentansprüche**

1. Polycarbonatzusammensetzung, umfassend die folgenden Komponenten in Gewichtsteilen:

a. 30-75 Teile des Polycarbonats;
b. 8,5-35 Teile des kautschukmodifizierten Pfropfcopolymers;
c. 5,5-25 Teile des Flammschutzmittels; und
d. 0-10 Teile der anderen Hilfsmittel;
wobei die Summe der Gewichtsteile der vier Komponenten a, b, c und d 100 ist, und ein Mischungs-Massenprozentsatz eines Glycerinstearats und eines Stearat-Salzes basierend auf einer Gesamtmasse der Polycarbonatzusammensetzung kleiner oder gleich 1,5 Gew.-% und größer oder gleich 0,01 Gew.-% ist.

2. Die Polycarbonatzusammensetzung nach Anspruch 1, wobei der Massenprozentanteil des Glycerinstearats und des Stearat-Salzes, bezogen auf die Gesamtmasse der Polycarbonatzusammensetzung, kleiner oder gleich 1 Gew.-% und größer oder gleich 0,05 Gew.-%; bevorzugter kleiner oder gleich 0,8 Gew.-% und größer oder gleich 0,1 Gew.-% ist.

3. Die Polycarbonatzusammensetzung nach Anspruch 1 oder 2, wobei ein Mischungsgewichtsverhältnis des Glycerinstearats zum Stearat-Salz 2:1 bis 1:5, vorzugsweise 1:2 bis 1:3 beträgt.

4. Die Polycarbonatzusammensetzung nach einem der Ansprüche 1 bis 3, wobei das Glycerinstearat ausgewählt ist aus einem oder mehreren von Glycerinmonostearat, Glycerindistearat und Glycerintristearat; und das Stearat-Salz ausgewählt ist aus einem oder mehreren von Zinkstearat, Magnesiumstearat und Calciumstearat.

5. Die Polycarbonatzusammensetzung nach Anspruch 1, wobei das Polycarbonat ausgewählt ist aus einem oder mehreren eines Polycarbonats, das durch ein Grenzflächenpolymerisationsverfahren hergestellt wird, einem Polycarbonat, das durch ein Umesterungsverfahren im geschmolzenen Zustand hergestellt wird, einem Polycarbonat, das durch ein Pyridinverfahren hergestellt wird, einem Polycarbonat, das durch ein Verfahren zur Ringöffnungspolymerisation einer cyclischen Carbonatverbindung hergestellt wird, und einem Polycarbonat, das durch ein Verfahren zur Festphasenumesterung eines Präpolymers hergestellt wird.

6. Die Polycarbonatzusammensetzung nach Anspruch 1, wobei das Polycarbonat ausgewählt ist aus einem oder mehreren aus einem aromatischen Polycarbonat, einem aliphatischen Polycarbonat, einem aromatisch-aliphatischen Polycarbonat, einem verzweigten Polycarbonat und einem Siloxan-Copolycarbonat, vorzugsweise dem aromatischen Polycarbonat; und das aromatische Polycarbonat ausgewählt ist aus einem aromatischen Polycarbonat mit einem viskositätsmittleren Molekulargewicht von 13000-40000, bevorzugter dem aromatischen Polycarbonat mit dem viskositätsmittleren Molekulargewicht von 16000-28000 und bevorzugter dem aromatischen Polycarbonat mit dem viskositätsmittleren Molekulargewicht von 17000-24000, wobei die viskositätsmittleren Molekulargewichte durch eine Messung mit einem Ubbelohdeviskosimeter und mit Chlormethan als Lösungsmittel bei einer Temperatur von 20 °C und unter Verwendung des in der vorliegenden Spezifikation angegebenen Verfahrens bestimmt werden.

7. Die Polycarbonatzusammensetzung nach Anspruch 1, wobei das kautschukmodifizierte Pfropfcopolymer ausgewählt ist aus einem oder mehreren von einem kautschukmodifizierten Pfropfpolymer, das durch eine Emulsionspolymerisation hergestellt ist, einem kautschukmodifizierten Pfropfpolymer, das durch eine Lösungspolymerisation hergestellt ist, einem kautschukmodifizierten Pfropfpolymer, das durch eine Massenpolymerisation hergestellt ist, einem kautschukmodifizierten Pfropfpolymer, das durch eine Suspensionspolymerisation hergestellt ist, und einem kautschukmodifizierten Pfropfpolymer, das durch eine Massen-Suspensionspolymerisation hergestellt ist.

8. Die Polycarbonatzusammensetzung nach Anspruch 1, wobei das kautschukmodifizierte Pfropfcopolymer ausgewählt ist aus Pfropfcopolymeren, die folgendes b.1 auf b.2 in Gewichtsteilen enthalten:

   b.1 5-95 Teile einer Mischung aus b.1.1 und b.1.2:

   b.1.1 50-95 Teile eines oder mehrerer von Styrol, einem Styrolderivat wie $\alpha$-Methylstyrol, p-Benzylstyrol und Divinylstyrol, einem C1-C8-Alkylmethacrylat, einem C1-C8-Alkylacrylat, Dimethyl-Siloxan, Phenylsiloxan und einem Multi-Alkylsiloxan;
   b.1.2 5-50 Teile eines oder mehrerer von Acrylnitril, Methylacrylnitril, einem C1-C8-Alkylmethacrylat und einem C1-C8-Alkylacrylat; und

   b.2 5-95 Teile eines oder mehrerer von Polybutadien, einem zufälligen Styrol-Butadien-Copolymer und Blockcopolymer, einem zufälligen Acrylnitril-Butadien-Copolymer und Blockcopolymer, einem Copolymer aus einem Polybutadien und einem Polyisopren, einem Copolymer aus Ethylen und $\alpha$-Alken, einem Copolymer aus Ethylen und einem $\alpha$-ungesättigten Carboxylat und einem Ethylen-Propen nichtkonjugierten Dien-Terpolymers.

9. Die Polycarbonatzusammensetzung nach Anspruch 8, wobei das kautschukmodifizierte Pfropfcopolymer ausgewählt ist aus einem oder mehreren von einem Acrylnitril-StyrolCopolymer AS, einem Acrylnitril-Butadien-Styrol-Pfropfcopolymer ABS, einem Methylmethacrylat-Acrylnitril-Butadien-Styrol-Copolymers MABS, einem Acrylnitril-Styrol-Propensäure-Terpolymers ASA und einem Methylmethacrylat-Butadien-Styrol-Pfropfcopolymers MBS, vorzugsweise dem Acrylnitril-Butadien-Styrol-Pfropfcopolymer ABS; wobei eine Partikelgröße des MBS vorzugsweise 0,1 $\mu$m bis 0,5 $\mu$m ist, eine Partikelgröße des ABS in einem Massenpolymerisationsverfahren vorzugsweise 0,1 $\mu$m bis 2 $\mu$m ist und eine Partikelgröße des ABS in einem Emulsionspolymerisationsverfahren vorzugsweise 0,05 $\mu$m bis 0,2 $\mu$m ist.

10. Die Polycarbonatzusammensetzung nach Anspruch 1, wobei das Flammschutzmittel ausgewählt ist aus einem halogenbasierten Flammschutzmittel oder einem halogenfreien Flammschutzmittel, vorzugsweise dem halogenfreien Flammschutzmittel; das halogenbasierte Flammschutzmittel ausgewählt ist aus einem oder mehreren von einem bromierten Polystyrol, einem bromierten Polyphenylether, einem bromierten Bisphenol-A-Epoxidharz, einem bromierten Styrol-Maleinsäureanhydrid-Copolymer, einem bromierten Epoxidharz, einem bromierten Phenoxyharz, Decabromdiphenylether, Decabromdiphenyl, einem bromierten Polycarbonat, Perbromotricyclopentadecan oder einem bromierten aromatisch vernetzten Polymer, vorzugsweise dem bromierten Polystyrol; und das halogenfreie Flammschutzmittel ausgewählt ist aus einem oder mehreren von einem stickstoffhaltigen Flammschutzmittel, einem phosphorhaltigen Flammschutzmittel oder einem stickstoff- und phosphorhaltigen Flammschutzmittel, vorzugsweise dem phosphorhaltigen Flammschutzmittel.

**11.** Die Polycarbonatzusammensetzung nach Anspruch 10, wobei das phosphorhaltige Flammschutzmittel ausgewählt ist aus einem oder mehreren von Triphenylphosphat, Tritolylphosphat, Cresyldiphenylphosphat, Trixylylphosphat, Tris(2,4,6-trimethylphenyl)phosphat, Tris(2,4-Di-tert-butylphenyl)phosphat, Tris(2,6-Di-tert-butylphenyl)phosphat, Resorcin bis(diphenylphosphat), Hydrochinon bis(diphenylphosphat), Bisphenol A-bis(diphenylphosphat), Resorcin bis(2,6-Di-tert-butylphenylphosphat) und Hydrochinon bis(2,6-Dimethylphenylphosphat).

**12.** Die Polycarbonatzusammensetzung nach Anspruch 1, wobei die anderen Hilfsmittel der Komponente d ausgewählt sind aus einem oder mehreren von einem Hitzestabilisator, einem Antioxidans, einem Anti-Tropfmittel, einem Lichtstabilisator, einem Weichmacher, einem Füllstoff und einem Farbmittel.

**13.** Herstellungsverfahren der Polycarbonatzusammensetzung nach einem der Ansprüche 1 bis 12, **dadurch gekennzeichnet, dass** das Herstellungsverfahren folgende Schritte umfasst:

1) Zugabe eines Glycerinstearats und eines Stearat-Salzes mit einem Mischungsmassenprozentsatz in Bezug auf die Polycarbonatzusammensetzung, der kleiner oder gleich 1,5 Gew.-% und größer oder gleich 0,01 Gew.-% ist, zu einer kautschukmodifizierten Pfropfpolymerkomponente, um ein vorbehandeltes kautschukmodifiziertes Pfropfpolymer zu erhalten; und

2) nach dem Wiegen des vorbehandelten kautschukmodifizierten Pfropfpolymers, der Polycarbonatzusammensetzung, eines Flammschutzmittels und anderer Hilfsmittel im Verhältnis, Mischen durch einen Hochgeschwindigkeitsmischer oder einen Mischer, Extrudieren, Kühlen mittels Wasser und Pelletieren, eine Polycarbonatzusammensetzung saulenärtiger Partikel zu erhalten.

## Revendications

**1.** Composition de polycarbonate, comprenant les composants suivants en parties en poids :

a. 30 à 75 parties du polycarbonate;
b. 8,5 à 35 parties de copolymère greffé modifié par du caoutchouc;
c. 5,5 à 25 parties d'agent ignifuge; et
d. 0 à 10 parties d'autres adjuvants ;
dans lequel la somme des parties en poids des quatre composants a, b, c et d est égale à 100, et
une teneur combinée en pourcentage en poids d'un stéarate de glycéryle et d'un sel de stéarate par rapport à la masse totale de la composition de polycarbonate est inférieure ou égale à 1,5% en poids et supérieure ou égale à 0,01% en poids.

**2.** La composition de polycarbonate selon la revendication 1, dans laquelle la teneur combinée en pourcentage en poids du stéarate de glycéryle et du sel de stéarate par rapport à la masse totale de la composition de polycarbonate est inférieure ou égale à 1% en poids et supérieure ou égale à 0,05% en poids; plus préférablement inférieure ou égale à 0,8% en poids et supérieure ou égale à 0,1% en poids.

**3.** La composition de polycarbonate selon la revendication 1 ou 2, dans laquelle le rapport combiné en poids de composition du stéarate de glycéryle sur le sel de stéarate est de 2:1 à 1:5; de préférence 1:2 à 1:3.

**4.** La composition de polycarbonate selon l'une quelconque des revendications 1 à 3, dans laquelle le stéarate de glycéryle est choisi parmi un ou plusieurs d'entre un monostéarate de glycérine, un distéarate de glycérol et un tristéarate de glycéryle; et le sel de stéarate est choisi parmi un ou plusieurs d'entre un stéarate de zinc, un stéarate de magnésium et un stéarate de calcium.

**5.** La composition de polycarbonate selon la revendication 1, dans laquelle le polycarbonate est choisi parmi un ou plusieurs d'entre un polycarbonate préparé par un procédé de polymérisation interfaciale, un polycarbonate préparé par un procédé de transestérification à l'état fondu, un polycarbonate préparé par un procédé de pyridine, un polycarbonate préparé par un procédé de polymérisation par ouverture de cycle d'un composé de carbonate cyclique et d'un polycarbonate préparé par un procédé de transestérification en phase solide d'un prépolymère.

**6.** La composition de polycarbonate selon la revendication 1, dans laquelle le polycarbonate est choisi parmi un ou plusieurs d'entre un polycarbonate aromatique, un polycarbonate aliphatique, un polycarbonate aromatique-aliphatique, un polycarbonate ramifié et un copolycarbonate de siloxane, préférablement le polycarbonate aromatique; et le polycarbonate aromatique est choisi parmi un polycarbonate aromatique ayant une masse moléculaire moyenne déterminée par la viscosité comprise entre 13000 et 40000, plus préférablement le polycarbonate aromatique ayant une masse moléculaire moyenne déterminée par la viscosité comprise entre 16000 et 28000, et plus préférentiellement le polycarbonate aromatique ayant une masse moléculaire moyenne déterminée par la viscosité comprise entre 17000 et 24000, dans laquelle les masses moléculaire moyennes déterminées par la viscosité sont déterminées par une mesure utilisant un viscomètre Ubbelohde et du dichlorométhane en tant que solvant, à une température de 20°C selon le procédé donné dans la présente description.

7. La composition de polycarbonate selon la revendication 1, dans laquelle le copolymère greffé modifié par du caoutchouc est choisi parmi un ou plusieurs d'entre un copolymère greffé modifié par du caoutchouc préparé par une polymérisation en émulsion, un polymère greffé modifié par du caoutchouc préparé par une polymérisation en solution, un polymère greffé modifié par du caoutchouc préparé par une polymérisation en masse, un polymère greffé modifié par du caoutchouc préparé par une polymérisation en suspension et un polymère greffé modifié par du caoutchouc préparé par une polymérisation en suspension en masse.

8. La composition de polycarbonate selon la revendication 1, dans laquelle le copolymère greffé modifié par du caoutchouc est choisi parmi les copolymères greffés contenant les rapports b.1 sur b.2 suivants en parties en poids:

   b.1 5 à 95 parties d'un mélange de b.1.1 et b.1.2:

   b.1.1 50 à 95 parties au moins d'un ou plusieurs d'entre du styrène, un dérivé du styrène tel que l'$\alpha$-méthyl styrène, du p-benzyl styrène et du divinyl styrène, un méthacrylate d'alkyle en C1 à C8, un acrylate d'alkyle en C1 à C8, du diméthyl siloxane, du phényl siloxane et un multi-alkyl siloxane;
   b.1.2 5 à 50 parties d'un ou plusieurs d'entre de l'acrylonitrile, un méthylacrylonitrile, un méthacrylate d'alkyle en C1 à C8 et un acrylate d'alkyle en C1 à C8; et

   b.2 5 à 95 parties d'un ou plusieurs d'entre du polybutadiène, un copolymère statistique et un copolymère séquencé styrène-butadiène, un copolymère statistique et un copolymère séquencé acrylonitrile-butadiène, un copolymère d'un polybutadiène et d'un polyisoprène, un copolymère d'éthylène et d'$\alpha$-alcène, un copolymère d'éthylène et d'un carboxylate $\alpha$-insaturé, et un terpolymère d'éthylène-propène-diène non conjugué.

9. La composition de polycarbonate selon la revendication 8, dans laquelle le copolymère greffé modifié par du caoutchouc est choisi parmi un ou plusieurs d'entre un copolymère acrylonitrile-styrène AS, un copolymère greffé d'acrylonitrile-butadiène-styrène ABS, un copolymère méthacrylate de méthyle-acrylonitrile-butadiène-styrène MABS, un terpolymère d'acide acrylontrile-styrène-propenoïque ASA et un copolymère greffé de méthacrylate de méthyle-butadiène-styrène MBS, préférablement, le copolymère greffé d'acrylonitrile-butadiène-styrène ABS; dans laquelle une taille de particule du MBS est préférablement comprise entre 0,1 $\mu$m et 0,5 $\mu$m, une taille de particule de l'ABS dans un procédé de polymérisation en masse est préférablement comprise entre 0,1 $\mu$m et 2 $\mu$m et la taille de particule de l'ABS dans un procédé de polymérisation en émulsion est préférablement comprise entre 0,05 $\mu$m et 0,2 $\mu$m.

10. La composition de polycarbonate selon la revendication 1, dans laquelle l'agent ignifuge est choisi parmi un agent ignifuge à base d'halogène ou un agent ignifuge sans halogène, préférablement l'agent ignifuge sans halogène; l'agent ignifuge à base d'halogène est choisi parmi un ou plusieurs d'entre un polystyrène bromé, un éther polyphényl bromé, une résine époxy de type bisphénol A bromée, un copolymère anhydride styrène-maléique bromé, une résine époxy bromée, une résine phénoxy bromée, un décabromodiphényléther, un décabromodiphényle, un polycarbonate bromé, un perbromotricyclopentadécane ou un polymère réticulé aromatique bromé, préférablement le polystyrène bromé; et l'agent ignifuge sans halogène est choisi parmi un ou plusieurs d'entre un agent ignifuge contenant de l'azote, un agent ignifuge contenant du phosphore, ou un agent ignifuge contenant de l'azote et du phosphore, préférablement l'agent ignifuge contenant du phosphore.

11. La composition de polycarbonate selon la revendication 10, dans laquelle l'agent ignifuge contenant du phosphore est choisi parmi un ou plusieurs d'entre du phosphate de triphényle, du phosphate de tritolyle, du phosphate de crésyle diphényle, du phosphate de trixylyle, du phosphate de tris (2,4,6-triméthylphényle), du phosphate de tris (2,4-di-tert-butylphényl), du phosphate de tris (2, 6-di-tert-butylphényle), du résorcinol bis(diphénylphosphate), de la hydroquinone bis (diphénylphosphate), du bisphénol A-bis(diphénylphosphate), du résorcinol bis(2,6-di-tert-butylphényl phosphate) et de l'hydroquinone bis(2,6-diméthylphénylphosphate).

**12.** La composition de polycarbonate selon la revendication 1, dans laquelle les autres adjuvants du composant d sont choisis parmi un ou plusieurs d'entre un stabilisant thermique, un antioxydant, un agent anti-gouttes, un stabilisant à la lumière, un plastifiant, une charge et un colorant.

**13.** Procédé de préparation de la composition de polycarbonate selon l'une quelconque des revendications 1 à 12, **caractérisé en ce que** le procédé de préparation comprend les étapes suivantes:

1) ajouter un stéarate de glycéryle et un sel de stéarate avec une teneur combinée en pourcentage en poids par rapport à la composition de polycarbonate qui est inférieure ou égale à 1,5% en poids et supérieure ou égale à 0,01% en poids, dans un composant polymère greffé modifié au caoutchouc pour obtenir un polymère greffé modifié au caoutchouc prétraité; et

2) après avoir pesé le polymère greffé modifié au caoutchouc prétraité, la composition de polycarbonate, un agent ignifuge et d'autres adjuvant en proportion, mélanger au moyen d'un mélangeur à grande vitesse ou d'un mélangeur, extruder, refroidir au moyen d'eau et former en granules pour obtenir une composition de polycarbonate particulaire en colonnes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2619264194 A1
- CN 104479323 A
- CN 102791787
- EP 640655 A
- GB 104012 A

**Non-patent literature cited in the description**

- *Macromol. Chem.,* 1965, vol. 88, 215
- *CHEMICAL ABSTRACTS,* 2082-79-3